# EUROPEAN PATENT APPLICATION

(11) **EP 4 644 204 A1**
(43) Date of publication of application: **05.11.2025**
(21) Application number: 25161061.4
(22) Date of filing: 28.02.2025
(51) Int. Cl.: B60W 50/08, B60K 35/10, B60W 50/12, B60W 50/14, B60K 28/00

(54) **METHOD OF CONTROLLING VEHICLE OPERATION, SYSTEM FOR IMPLEMENTING THE SAME, AND VEHICLE**

(30) Priority: 02.05.2024 US 202418653894
(71) Applicant: TOYOTA JIDOSHA KABUSHIKI KAISHA, Toyota-shi, Aichi-ken, 471-8571 (JP)
(72) Inventor: HARA, Yusuke, Toyota-shi, 471-8571 (JP); DATE, Mitsuo, Toyota-shi, 471-8571 (JP)
(74) Representative: D Young & Co LLP

(57) **Abstract**

A vehicle includes a non-transitory computer readable medium configured to store instructions thereon. The vehicle further includes a processor connected to the non-transitory computer readable medium. The processor is configured to execute the instructions for detecting an input from a non-driver occupant of the vehicle. The processor is configured to execute the instructions for determining whether the input is a request for an improper action. The processor is configured to execute the instructions for notifying the driver of the request in response to a determination that the input is the request for an improper action. The processor is configured to execute the instructions for executing the improper action in response to receiving approval from the driver following the notifying of the driver.

## Description

### BACKGROUND

As a driver operates a vehicle, other occupants of the vehicle interact with systems in the vehicle, such as an infotainment system. In some instances, vehicle operations requested by the non-driver occupants are improper. For example, in some instances, execution of a requested action increases a risk of distracting the driver or exposes the non-diver occupants to inappropriate content.

### SUMMARY

An aspect of this description relates to a vehicle. The vehicle includes a non-transitory computer readable medium configured to store instructions thereon. The vehicle further includes a processor connected to the non-transitory computer readable medium. The processor is configured to execute the instructions for detecting an input from a non-driver occupant of the vehicle. The processor is configured to execute the instructions for determining whether the input is a request for an improper action. The processor is configured to execute the instructions for notifying the driver of the request in response to a determination that the input is the request for an improper action. The processor is configured to execute the instructions for executing the improper action in response to receiving approval from the driver following the notifying of the driver.

An aspect of this description relates to a method. The method includes detecting an input from a non-driver occupant of a vehicle. The method further includes determining whether the input is a request for an improper action. The method further includes notifying the driver of the request in response to a determination that the input is the request for an improper action. The method further includes executing the improper action in response to receiving approval from the driver following the notifying of the driver.

A An aspect of this description relates to a vehicle. The vehicle includes a non-transitory computer readable medium configured to store instructions thereon. The vehicle further includes a processor connected to the non-transitory computer readable medium. The processor is configured to execute the instructions for detecting an input from an occupant of the vehicle. The processor is configured to execute the instructions for determining whether the occupant is a driver of the vehicle or a non-driver occupant of the vehicle. The processor is configured to execute the instructions for determining whether the input is a request for an improper action in response to a determination that the occupant is the non-driver occupant. The processor is configured to execute the instructions for notifying the driver of the request in response to a determination that the input is the request for an improper action. The processor is configured to execute the instructions for executing the improper action in response to receiving approval from the driver following the notifying of the driver.

### BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
Figure 1 is a flowchart of a method of controlling a vehicle system, in accordance with some embodiments.
Figure 2 is a perspective view of a vehicle, in accordance with some embodiments.
Figure 3 is a block diagram of a system for controlling a vehicle system, in accordance with some embodiments.

### DETAILED DESCRIPTION

The following disclosure provides many different embodiments, or examples, for implementing different features of the provided subject matter. Specific examples of components, values, operations, materials, arrangements, or the like, are described below to simplify the present disclosure. These are, of course, merely examples and are not intended to be limiting. Other components, values, operations, materials, arrangements, or the like, are contemplated. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

During operation of a vehicle, a driver focuses on a roadway while controlling the vehicle. As a result, the driver has a decreased capacity to monitor operation of one or more systems within the vehicle, such as windows, locks, or infotainment system, accessible by non-driver occupants of the vehicle. In some instances, the non-driver occupant inputs a request for an action by a vehicle system that is improper. An improper action includes an action which would increase a risk of distracting the driver, attempting to access inappropriate content, accessing a system where the non-driver occupant lacks authorization, or other similar actions. If these actions were implemented immediately upon receipt of the input from the non-driver occupant, then a risk of driver distraction increases or the non-driver occupant has a higher risk of being exposed to inappropriate content. In contrast, if the non-driver occupant is completely prohibited from accessing the vehicle systems, a sense of dissatisfaction with the vehicle increases in some situations.

The current description includes a method and a system for implementation in a vehicle to control operation of vehicle systems in a manner to reduces a risk of driver distraction or exposure of non-driver occupants to inappropriate content, while also still allowing non-driver occupants to have access to vehicle systems.

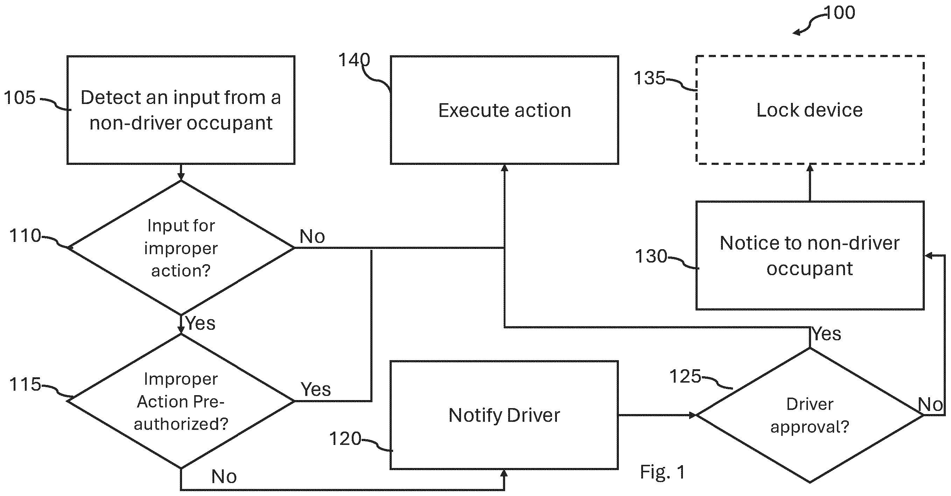

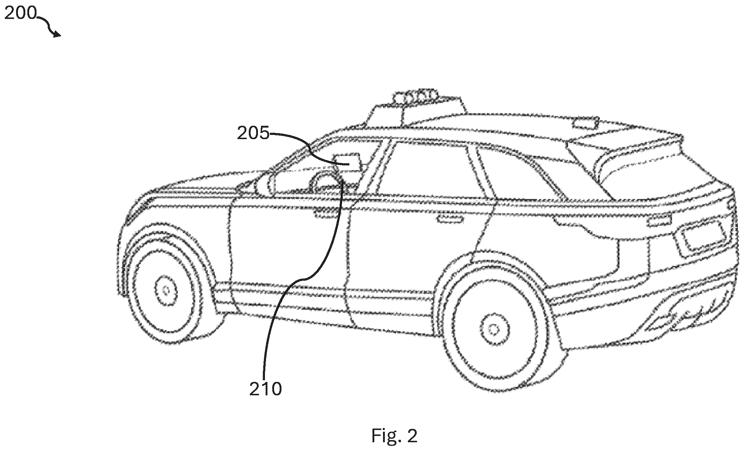

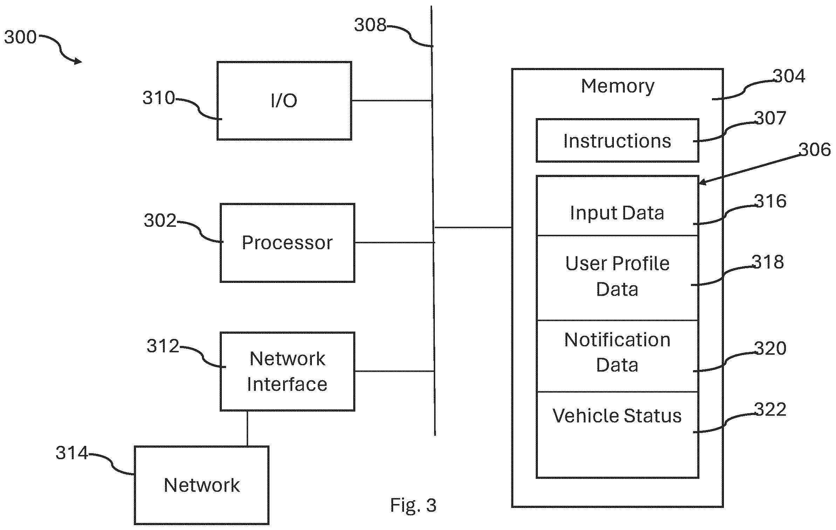

Figure 1 is a flowchart of a method 100 of controlling a vehicle system in accordance with some embodiments. The method 100 is usable to reduce a risk of execution of an improper action by a vehicle system based on an input from a non-driver occupant. In some embodiments, the method 100 is implemented using a system 300 (Figure 3). In some embodiments, the method 100 is implemented using a system other than the system 300 (Figure 3). In some embodiments, the method 100 is implemented in a vehicle 200 (Figure 2). In some embodiments, the method 100 is implemented in a vehicle other than the vehicle 200 (Figure 2).

In operation 105, an input from a non-driver occupant is detected. A non-driver occupant is any occupant of a vehicle other than the driver. The input is an attempt to cause an action by a vehicle system. A vehicle system includes an infotainment system, a navigation system, a window operation system, a door lock, a door, or other suitable vehicle system. The infotainment system includes a video display, a radio, an image display or other suitable infotainment system. In some embodiments, the vehicle system is located in the front portion of a vehicle cabin, such as a radio or navigation system. In some embodiments, the vehicle system is located in a rear portion of a vehicle cabin, such as a rear-seat entertainment system. In some embodiments, the vehicle system is located in the front portion of the vehicle cabin and at least one control for the vehicle system is located in the rear portion of the vehicle cabin, such as a radio which has rear seat controls for volume adjustment or station adjustment. In some embodiments, the input is received using a touch screen, a voice command, a knob, a button, a switch, or another suitable electronic or mechanical device for receiving a request for execution of an action by the vehicle system.

In some embodiments, the operation 105 further includes a determination regarding whether the detected input is from the driver or a non-driver occupant. In some embodiments, the determination for the occupant that initiated the detected input is based on a location of the detected input. For example, in some embodiments, where a location of the detected input is not accessible by the driver, such as a rear seat or a passenger door, a determination is made that a non-driver occupant initiated the detected input.

In some embodiments, the determination for the occupant that initiated the detected input is based on an in-cabin camera of the vehicle. For example, in some embodiments, the in-cabin camera captures images of a vehicle cabin and the captured images are compared with a location and/or a timing of the detected input to determine which occupant of the vehicle initiated the detected input. In some embodiments, the in-cabin vehicle camera captures less than an entirety of the cabin of the vehicle, e.g., only images of the driver are captured by the in-cabin camera. In response to detection of an input and the in-cabin vehicle camera indicating that the driver did not initiate the detected input, a determination is made that the non-driver occupant initiated the detected input.

In some embodiments, the determination for the occupant that initiated the detected input is based on a microphone in the vehicle. The microphone is configured to capture sounds within the cabin of the vehicle. In some embodiments, the microphone is configured to capture voice commands as the detected input. In some embodiments, a determination is made regarding which occupant initiated the detected input based on a direction of a source of the detected sound from the microphone. For example, in some embodiments when the sound originates at a location other than the driver seat of the vehicle, the determination is made that the non-driver occupant initiated the detected input. In some embodiments, the sound captured by the microphone is subjected to analysis using voice recognition software to determine an identity of the occupant that initiated the detected input.

In some embodiments, user profile data is used to determine a location of an occupant in the vehicle. A user profile is usable to set preferences of a certain occupant, such as seat position, steering wheel position, radio stations, etc. In some embodiments, a first person will have a first user profile and a second person will have a second user profile. When the first person enters the vehicle, the first person will input data indicating which seat to adjust according to the first user profile. The second person will similarly input data indicating which seat to adjust according to the second user profile. Using a location of the seat associated with each profile, a determination is able to be made regarding an identity and position of an occupant of a vehicle. For example, during a first operation of the vehicle, the first person enters data to set the driver seat using the first user profile. As a result, voice recognition that indicates the detected input is from the first person is usable to determine that the input is from the driver. However, in a second operation of the vehicle, the first person enters data to set a passenger seat using the first user profile. As a result, voice recognition that indicates that the detected input is from the first person is usable to determine that the input is from the non-driver occupant.

One of ordinary skill in the art would recognize that other criteria are usable to determine whether the driver or the non-driver occupant initiated the detected input and the current description is not limited solely to the example situations described above.

In operation 110, a determination is made regarding whether an action associated with the detected input is improper. An action is improper if the action would increase a risk of distraction to the driver, expose the non-driver occupant to inappropriate content, place the non-driver occupant at risk, is unauthorized for the non-driver occupant, or another unsuitable action. Potential actions that increase a risk of distraction to the driver include, increasing a volume of a device which a driver is able to hear; activating an interior light of a vehicle; inputting navigation instructions; adjusting a position of a driver seat; or another improper action. Potential actions that expose the non-driver occupant to inappropriate content include using an infotainment system to attempt to access content, such as a movie, show, or song, which is not appropriate for an age of the viewer or listener. For example, a child attempting to access a movie with a rating indicating adult content in the movie would potentially expose the child to inappropriate content if the action of displaying the movie is permitted. Potential actions that place the non-driver occupant at risk include opening a door, unlocking a door, opening a window, or other suitable actions. Potential actions that are unauthorized for the non-driver occupant include actions which are prohibited according to a user profile of the non-driver occupant. For example, in some instances, a parent has set authorizations level for a child as part of a user profile of the child; and any detected input attempting to implement an action that is not permitted based on the user profile of the child is an unauthorized action.

In some embodiments, the determination of whether an action is an improper action is based on a status of the vehicle. In some embodiments, a vehicle traveling at high speed, e.g., a speed above a predetermined threshold, has a highest level of restrictions on non-driver occupants, i.e., a highest number of improper actions. In some embodiments, a vehicle traveling at lower speed, e.g., a speed greater than zero and equal to or less than the predetermined threshold, has an intermediate number of improper actions. In some embodiments, a vehicle that the stopped, e.g., a speed of zero, has a lowest number of improper actions. In some embodiments, a vehicle having a gear shift in a parked position has no improper actions. One of ordinary skill in the art would understand that the above correlation of vehicle status and a number of improper actions is merely exemplary and does not limit the scope of this description. Other combinations of vehicle status and improper actions are within the scope of this description, such as tailoring the improper actions with both vehicle status and an identity of the non-driver occupant, e.g., using a user profile.

In response to a determination that the action associated with the detected input is not improper, i.e., is proper, the method 100 proceeds to operation 140 and the action is executed. In response to a determination that the action associated with the detected input is improper, the method 100 proceeds to operation 115.

In operation 115, a determination is made regarding whether the improper action is pre-authorized. Pre-authorization of an improper action means that a non-driver occupant is automatically permitted to initiate execution of the action despite the action being improper. In some embodiments, pre-authorization of an improper action is based on a location of the non-driver occupant. For example, in some embodiments, a front seat passenger is permitted to increase the volume of the radio because the driver is able to easily notice that the volume is being increased so a likelihood of the driver being distracted by the volume change is reduced. In some embodiments, pre-authorization of an improper action is based on a user profile of the non-driver occupant. For example, in some embodiments, a user profile of the non-driver occupant includes stored permissions for certain actions. The user profile is usable to determine an identity of the non-driver occupant as well as the location of the non-driver occupant in the vehicle, as discussed above.

In response to a determination that the improper action is pre-authorized, the method 100 proceeds to operation 140 and the action is executed. In response to a determination that the improper action is not preauthorized, the method 100 proceeds to operation 120.

In operation 120, a notification is sent to the driver regarding the improper action. In some embodiments, the notification indicates only that an improper action is requested. In some embodiments, the notification identifies the improper action requested and/or an identity or location of the non-driver occupant that requested the improper action. In some embodiments, the notification includes an audio notification, a tactile notification and/or a visual notification. An audio notification includes output of a tone, a sound, words, or other suitable audible information indicating that an improper action is requested. A tactile notification includes vibration of a steering wheel, vibration of a driver seat, or other suitable tactile indicators that an improper action is requested. A visual notification includes display of the notification on a console, a heads-up display (HUD) or infotainment system viewable by the driver.

In some embodiments, the notification to the driver is performed by systems mounted to the vehicle. In some embodiments, the notification to the driver is performed using mobile device that is separable from the vehicle, but that is accessible/viewable by the driver while operating the vehicle. In some embodiments, the vehicle is able to communicate with the mobile device using a wired connection or a wireless connection, e.g., Bluetooth^{®}.

In some embodiments, the notification includes a request for authorization of the action requested by the detected input. In some embodiments, the request for authorization is received by one type of notification, e.g., visual notification, while an additional notification, e.g., audio notification, is used to make the driver aware of the improper action request. One of ordinary skill in the art would recognize that additional combinations of notification and authorization requests are within the scope of this description.

In operation 125, a determination is made regarding whether the driver approved the improper action request. In some embodiments, the driver approval is received in response to a notification including a request for authorization. In some embodiments, the driver approval is received without the notification including a request for authorization. In some embodiments, the driver approval is received using a voice command from the driver. In some embodiments, voice recognition or a directional microphone is used to authenticate that an approval voice command is from the driver. In some embodiments, the driver approval is received by an input from the driver received by a touch screen, a control on the steering wheel, a control on a console, a mobile device accessible by the driver, or another suitable input. In some embodiments, the approval by the driver is authenticated using a personal identification number (PIN) to identify the driver. In some embodiments, failure by the driver to approve an improper action within a predetermined time after the notification to the driver constitutes a disapproval of the improper action request. In some embodiments, approval of the improper action request is determined based on a gesture of the driver detected using the in-cabin camera.

In response to a determination that the driver approved the improper action request, the method 100 proceeds to operation 140 and the action is executed. In response to a determination that the driver did not approve or disapprove the improper action request, the method 100 proceeds to operation 130.

In operation 130, a notification is sent to the non-driver occupant regarding the failure of the driver to approve the improper action request. In some embodiments, the notification indicates only that an improper action was denied. In some embodiments, the notification includes an option to renew the request for approval of the improper action. In some embodiments, in response to receiving a renewed request for approval of the improper action, the method 100 returns to operation 120 and the driver is notified of the renewed request.

In some embodiments, the notification includes an audio notification, a tactile notification and/or a visual notification. An audio notification includes output of a tone, a sound, words, or other suitable audible information indicating that an improper action was not approved. A tactile notification includes vibration of a seat of the non-driver occupant, or other suitable tactile indicators that an improper action was not approved. A visual notification includes display of the notification on a console, a heads-up display (HUD) or infotainment system viewable by the non-driver occupant.

In some embodiments, the notification to the non-driver occupant is performed by systems mounted to the vehicle. In some embodiments, the notification to the non-driver occupant is performed using mobile device that is separable from the vehicle, but that is accessible/viewable by the non-driver occupant. In some embodiments, the vehicle is able to communicate with the mobile device using a wired connection or a wireless connection, e.g., Bluetooth^{®}.

In operation 135, the device associated with the denied improper action is locked. Locking the device includes disabling the device until the driver or another authorized non-driver occupant re-activates the device. In some embodiments, the operation 135 is implemented following a predetermined number of improper action requests. In some embodiments, the operation 135 is omitted. Omitting the operation 135 would reduce effort for re-activating a locked device. Maintaining the operation 135 would potentially reduce a number of notifications received by the driver, which could potentially begin to distract the driver.

In operation 140, the requested action is executed. In some embodiments, the requested action is executed using systems mounted to the vehicle. In some embodiments, the requested action is executed using a mobile device accessible by the non-driver occupant. In some embodiments, the vehicle is able to communicate with the mobile device using a wired connection or a wireless connection, e.g., Bluetooth^{®}.

One of ordinary skill in the art would recognize that modifications to the method 100 are within the scope of this description. In some embodiments, the method 100 includes at least one additional operation. For example, in some embodiments, the method 100 includes an ability for another non-driver occupant to authorize a requested improper action to reduce distractions for the driver. In some embodiments, an identity of the other non-driver occupant is authenticated prior to permitting the other non-driver occupant to authorize an improper action request. In some embodiments, at least one operation of the method 100 is omitted. For example, in some embodiment, the operation 130 is omitted and the non-driver occupant is not notified by any means other than the requested action failing to occur. In some embodiments, an order of operations of the method 100 is adjusted. For example, in some embodiments, the operation 120 occurs prior to the operation 115; and request for approval of the improper action request is made after the determination of operation 115 in the modified flow of the method 100.

Figure 2 is a perspective view of a vehicle 200, in accordance with some embodiments. The vehicle 200 is capable of implementing the method 100 (Figure 1). In some embodiments, the vehicle 200 is capable of implementing the method 100 (Figure 1) using a system 300 (Figure 3) mounted in the vehicle. In some embodiments, the vehicle 200 is able to implement the method 100 (Figure 1) based on receiving instructions from the system 300 (Figure 3) remote or separable from the vehicle 200. In some embodiments where the system 300 (Figure 3) is remote or separable from the vehicle 200, the vehicle 200 is configured to receive instructions for implementing the method 100 (Figure 1) either wirelessly or via a wired connection.

The vehicle 200 includes one or more vehicle systems for implementing operations of the vehicle. In some embodiments, the one or more vehicle systems include an infotainment system, automatic door locks, automatic window controls, automatic door opening mechanisms, radio controls, etc. In some embodiments, the vehicle 200 includes the one or more vehicle systems in only the front portion of the vehicle cabin. In some embodiments, the vehicle 200 includes the one or more vehicle systems in both the front portion of the vehicle cabin and the rear portion of the vehicle cabin.

The vehicle 200 further includes a display 205. In some embodiments, notifications, e.g., notifications from the operation 120 (Figure 1), are displayed on the display 205. In some embodiments, approval of an improper action request, e.g., for operation 125 (Figure 1), is received through a touch screen of the display 205.

The vehicle 200 further includes a steering wheel 210. In some embodiments, notifications, e.g., notifications from the operation 120 (Figure 1), are tactilely received through the steering wheel 210. In some embodiments, approval of an improper action request, e.g., for operation 125 (Figure 1), is received through a button or switch of the steering wheel.

One of ordinary skill in the art would recognize that additional vehicle systems for receiving notifications and approvals are includable in the vehicle 200.

Figure 3 is a block diagram of a system 300 for controlling a vehicle system in accordance with one or more embodiments. System 300 includes a hardware processor 302 and a non-transitory, computer readable storage medium 304 encoded with, i.e., storing, the computer program code 306, i.e., a set of executable instructions. Computer readable storage medium 304 is also encoded with instructions 307 for interfacing with manufacturing machines for producing the memory array. The processor 302 is electrically coupled to the computer readable storage medium 304 via a bus 308. The processor 302 is also electrically coupled to an input/output (I/O) interface 310 by bus 308. A network interface 312 is also electrically connected to the processor 302 via bus 308. Network interface 312 is connected to a network 314, so that processor 302 and computer readable storage medium 304 are capable of connecting to external elements via network 314. The processor 302 is configured to execute the computer program code 306 encoded in the computer readable storage medium 304 in order to cause system 300 to be usable for performing a portion or all of the operations as described in method 100 (Figure 1) or implemented by the vehicle 200 (Figure 2).

In some embodiments, the processor 302 is a central processing unit (CPU), a multi-processor, a distributed processing system, an application specific integrated circuit (ASIC), and/or a suitable processing unit.

In some embodiments, the computer readable storage medium 304 is an electronic, magnetic, optical, electromagnetic, infrared, and/or a semiconductor system (or apparatus or device). For example, the computer readable storage medium 504 includes a semiconductor or solid-state memory, a magnetic tape, a removable computer diskette, a random access memory (RAM), a read-only memory (ROM), a rigid magnetic disk, and/or an optical disk. In some embodiments using optical disks, the computer readable storage medium 504 includes a compact disk-read only memory (CD-ROM), a compact disk-read/write (CD-R/W), and/or a digital video disc (DVD).

In some embodiments, the storage medium 304 stores the computer program code 304 configured to cause system 300 to perform a portion or all of the operations as described in method 100 (Figure 1) or implemented by the vehicle 200 (Figure 2). In some embodiments, the storage medium 304 also stores information used for performing a portion or all of the operations as described in method 100 (Figure 1) or implemented by the vehicle 200 (Figure 2) as well as information generated during performing a portion or all of the operations as described in method 100 (Figure 1) or implemented by the vehicle 200 (Figure 2), such as an input data parameter 316, a user profile parameter 318, a notification data parameter 320, a vehicle status parameter 322, and/or a set of executable instructions to perform the operation of a portion or all of the operations as described in method 100 (Figure 1) or implemented by the vehicle 200 (Figure 2).

In some embodiments, the storage medium 304 stores instructions 307 for interfacing with external devices, e.g., mobile devices. The instructions 307 enable processor 302 to generate or receive instructions readable by the external devices during implementation of a portion or all of the operations as described in method 100 (Figure 1) or implemented by the vehicle 200 (Figure 2).

System 300 includes I/O interface 310. I/O interface 310 is coupled to external circuitry. In some embodiments, I/O interface 310 includes a keyboard, keypad, mouse, trackball, trackpad, touch screen and/or cursor direction keys for communicating information and commands to processor 302.

System 300 also includes network interface 312 coupled to the processor 302. Network interface 312 allows system 300 to communicate with network 314, to which one or more other computer systems are connected. Network interface 312 includes wireless network interfaces such as BLUETOOTH, WIFI, WIMAX, GPRS, or WCDMA; or wired network interface such as ETHERNET, USB, or IEEE-1394. In some embodiments, a portion or all of the operations as described in method 100 (Figure 1) or implemented by the vehicle 200 (Figure 2) is implemented in two or more systems 300, and information such as sensor data, window transmission rate, forecast information or vehicle status are exchanged between different systems 300 via network 314.

### Supplemental Note 1

An aspect of this description relates to a vehicle. The vehicle includes a non-transitory computer readable medium configured to store instructions thereon. The vehicle further includes a processor connected to the non-transitory computer readable medium. The processor is configured to execute the instructions for detecting an input from a non-driver occupant of the vehicle. The processor is configured to execute the instructions for determining whether the input is a request for an improper action. The processor is configured to execute the instructions for notifying the driver of the request in response to a determination that the input is the request for an improper action. The processor is configured to execute the instructions for executing the improper action in response to receiving approval from the driver following the notifying of the driver.

### Supplemental Note 2

The vehicle according to Supplemental Note 1, wherein the processor is further configured to execute the instructions for determining whether the improper action is pre-authorized; and notifying the driver of the request is further in response to a determination that the improper action is not preauthorized.

### Supplemental Note 3

The vehicle according to Supplemental Note 1 or Supplemental Note 2, wherein the processor is further configured to execute the instructions for receiving approval from the driver of the request for the improper action.

### Supplemental Note 4

The vehicle according to any of Supplemental Note 1-3, wherein the receiving approval from the driver comprises receiving approval by actuation of a touch screen, actuation of an element on a steering wheel, actuation of an element on a console, or detecting of a voice command.

### Supplemental Note 5

The vehicle according to any of Supplemental Note 1-4, wherein the processor is further configured to execute the instruction for notifying the driver using at least one of an audio notification or a visual notification.

### Supplemental Note 6

The vehicle according to any of Supplemental Note 1-5, wherein the processor is further configured to execute the instructions for notifying the driver by communicating a notification to a mobile device viewable by the driver.

### Supplemental Note 7

The vehicle according to any of Supplemental Note 1-6, wherein the processor is further configured to execute the instructions for locking a device associated with the improper action in response to a failure of the driver to approve the improper action.

### Supplemental Note 8

An aspect of this description relates to a method. The method includes detecting an input from a non-driver occupant of a vehicle. The method further includes determining whether the input is a request for an improper action. The method further includes notifying the driver of the request in response to a determination that the input is the request for an improper action. The method further includes executing the improper action in response to receiving approval from the driver following the notifying of the driver.

### Supplemental Note 9

The method according to Supplemental Note 8, further includes determining whether the improper action is pre-authorized; and notifying the driver of the request in response to a determination that the improper action is not preauthorized.

### Supplemental Note 10

The method according to Supplemental Note 8 or Supplemental Note 9, further includes receiving approval from the driver of the request for the improper action.

### Supplemental Note 11

The method according to any of Supplemental Note 8-10, wherein the receiving approval from the driver includes receiving approval by actuation of a touch screen, actuation of an element on a steering wheel, actuation of an element on a console, or detecting of a voice command.

### Supplemental Note 12

The method according to any of Supplemental Note 8-11, wherein notifying the driver includes using at least one of an audio notification or a visual notification.

### Supplemental Note 13

The method according to any of Supplemental Note 8-12, wherein notifying the driver includes communicating a notification to a mobile device viewable by the driver.

### Supplemental Note 14

The method according to any of Supplemental Note 8-13, further includes locking a device associated with the improper action in response to a failure of the driver to approve the improper action.

### Supplemental Note 15

An aspect of this description relates to a vehicle. The vehicle includes a non-transitory computer readable medium configured to store instructions thereon. The vehicle further includes a processor connected to the non-transitory computer readable medium. The processor is configured to execute the instructions for detecting an input from an occupant of the vehicle. The processor is configured to execute the instructions for determining whether the occupant is a driver of the vehicle or a non-driver occupant of the vehicle. The processor is configured to execute the instructions for determining whether the input is a request for an improper action in response to a determination that the occupant is the non-driver occupant. The processor is configured to execute the instructions for notifying the driver of the request in response to a determination that the input is the request for an improper action. The processor is configured to execute the instructions for executing the improper action in response to receiving approval from the driver following the notifying of the driver.

### Supplemental Note 16

The vehicle according to Supplemental Note 15, wherein the processor is further configured to execute the instructions for notifying the non-driver occupant in response to failure to receive approval from the driver.

### Supplemental Note 17

The vehicle according to Supplemental Note 15 or Supplemental Note 16, wherein the notifying the non-driver occupant includes providing a notification comprising an option to renew the request for the improper action.

### Supplemental Note 18

The vehicle according to any of Supplemental Note 15-17, wherein the processor is configured to execute the instructions for determining whether the occupant is the driver based on a location of the detected input in the vehicle.

### Supplemental Note 19

The vehicle according to any of Supplemental Note 15-18, wherein the processor is configured to execute the instructions for determining whether the occupant is the driver based on identifying information for the occupant.

### Supplemental Note 20

The vehicle according to any of Supplemental Note 15-19, wherein the identifying information includes voice recognition, voice origination location, or user profile information.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions, and alterations herein without departing from the spirit and scope of the present disclosure.

## Claims

1. A vehicle comprising:
a non-transitory computer readable medium configured to store instructions thereon; and
a processor connected to the non-transitory computer readable medium, wherein the processor is configured to execute the instructions for:
detecting an input from a non-driver occupant of the vehicle;
determining whether the input is a request for an improper action;
notifying the driver of the request in response to a determination that the input is the request for an improper action; and
executing the improper action in response to receiving approval from the driver following the notifying of the driver.

2. The vehicle according to claim 1, wherein the processor is further configured to execute the instructions for:
determining whether the improper action is pre-authorized; and
notifying the driver of the request in response to a determination that the improper action is not preauthorized.

3. The vehicle according to claim 1 or 2, wherein the processor is further configured to execute the instructions for:
receiving approval from the driver of the request for the improper action.

4. The vehicle according to claim 3, wherein the receiving approval from the driver comprises receiving approval by actuation of a touch screen, actuation of an element on a steering wheel, actuation of an element on a console, or detecting of a voice command.

5. The vehicle according to any one of claims 1 to 4, wherein the processor is further configured to execute the instruction for notifying the driver using at least one of an audio notification or a visual notification.

6. The vehicle according to any one of claims 1 to 5, wherein the processor is further configured to execute the instructions for notifying the driver by communicating a notification to a mobile device viewable by the driver.

7. The vehicle according to any one of claims 1 to 6, wherein the processor is further configured to execute the instructions for locking a device associated with the improper action in response to a failure of the driver to approve the improper action.

8. A method comprising:
detecting an input from a non-driver occupant of a vehicle;
determining whether the input is a request for an improper action;
notifying the driver of the request in response to a determination that the input is the request for an improper action; and
executing the improper action in response to receiving approval from the driver following the notifying of the driver.

9. The method according to claim 8, further comprising:
determining whether the improper action is pre-authorized; and
notifying the driver of the request in response to a determination that the improper action is not preauthorized.

10. The method according to claim 8 or 9, further comprising:
receiving approval from the driver of the request for the improper action.

11. The method according to claim 10, wherein the receiving approval from the driver comprises receiving approval by actuation of a touch screen, actuation of an element on a steering wheel, actuation of an element on a console, or detecting of a voice command.

12. The method according to any one of claims 8 to 11, wherein notifying the driver comprises using at least one of an audio notification or a visual notification.

13. The method according to any one of claims 8 to 12, wherein notifying the driver comprises communicating a notification to a mobile device viewable by the driver.

14. The method according to any one of claims 8 to 13, further comprising:
locking a device associated with the improper action in response to a failure of the driver to approve the improper action.

15. A vehicle comprising:
a non-transitory computer readable medium configured to store instructions thereon; and
a processor connected to the non-transitory computer readable medium, wherein the processor is configured to execute the instructions for:
detecting an input from an occupant of the vehicle;
determining whether the occupant is a driver of the vehicle or a non-driver occupant of the vehicle;
determining whether the input is a request for an improper action in response to a determination that the occupant is the non-driver occupant;
notifying the driver of the request in response to a determination that the input is the request for an improper action; and
executing the improper action in response to receiving approval from the driver following the notifying of the driver.

16. The vehicle according to claim 15, wherein the processor is further configured to execute the instructions for:
notifying the non-driver occupant in response to failure to receive approval from the driver.

17. The vehicle according to claim 16, wherein the notifying the non-driver occupant includes providing a notification comprising an option to renew the request for the improper action.

18. The vehicle according to any one of claims 15 to 17, wherein the processor is configured to execute the instructions for determining whether the occupant is the driver based on a location of the detected input in the vehicle.

19. The vehicle according to any one of claims 15 to 18, wherein the processor is configured to execute the instructions for determining whether the occupant is the driver based on identifying information for the occupant.

20. The vehicle according to claim 19, wherein the identifying information comprises voice recognition, voice origination location, or user profile information.
